# EUROPEAN PATENT SPECIFICATION

(11) **EP 3 434 571 B1**
(45) Date of publication and mention of the grant of the patent: **30.06.2021**
(21) Application number: 18181213.2
(22) Date of filing: 02.07.2018
(51) Int. Cl.: B62K 11/04, B62M 7/04

(54) **UNDERBONE VEHICLE**
UNDERBONE-FAHRZEUG
VÉHICULE SOUS-OSSAL

(30) Priority: 28.07.2017 JP 2017146917
(43) Date of publication of application: 30.01.2019
(73) Proprietor: Yamaha Hatsudoki Kabushiki Kaisha, Iwata-shi Shizuoka 438-8501 (JP)
(72) Inventor: WORAKASEMSUK, Pairuch, 10540 Samutprakarn (TH); SUBESURMWETCHAKUL, Nattachai, 10540 Samutprakarn (TH)
(74) Representative: Grünecker Patent- und Rechtsanwälte PartG mbB

(56) References cited:
- EP-A1- 2 055 621
- EP-A1- 2 085 306
- EP-A1- 2 236 339
- EP-A1- 2 647 558
- EP-A1- 2 979 963
- WO-A1-2012/074073
- JP-A- 2010 126 057

## Description

### TECHNICAL FIELD

The present invention relates to an underbone vehicle.

### BACKGROUND

A motorcycle disclosed in Japanese Patent Application Laid-open No. 2011-174428 is called a so-called underbone vehicle. The underbone vehicle has a head pipe, a front cover, and a seat on which a driver sits. The head pipe is disposed at the vehicle center in the vehicle width direction. The front cover is disposed in front of the head pipe. The seat is disposed more rearward than the head pipe.

The underbone vehicle includes a main frame and a steering device. The main frame extends rearward and downward from the head pipe toward a position further lower than the seat. The steering device includes a handle operated by a driver, a front fork, and a front wheel. The handle is disposed more upward than the head pipe and more forward than the seat. The front fork is inserted in the head pipe. The front wheel is supported by the front fork.

The underbone vehicle is provided with a front fender covering the front wheel. The front fender is quite large and extends from a position more forward than the rotation center of the front wheel to a position more rearward than the rear end of the front wheel. In a front view of the vehicle, the front fender overlaps with the front wheel. The steering device is rotated when the driver operates the handle.

The underbone vehicle is provided with an engine and an air cleaner. The engine is disposed under the main frame and is supported by the main frame in a non-swingable manner. The engine is arranged such that a portion thereof is disposed more forward than the seat. The air cleaner is arranged such that at least a portion thereof is disposed between the main frame and the engine in the vehicle up-down direction. Because the engine is disposed under the main frame, the engine is liable to be splashed with water or mud thrown from the front wheel. However, the above described large front fender decreases water and mud from splashing onto the engine.

The driver sitting on the seat places his or her feet on a main step that is positioned more rearward than the front end of the engine and is located further lower than the seat.

The main frame is covered from the top with a main frame cover 73, and a straddling portion recessed downward is disposed in front of the seat. The straddling portion is recessed more downward than the seat to thereby ensure the driver's ease of getting on and off the vehicle.

A leg shield for decreasing running wind or the like hitting the legs of the driver is disposed more outward and forward than the straddling portion. The leg shield is disposed more forward than the main step. The leg shield is disposed more forward than the main step to thereby secure the driver's ease of getting on and off the vehicle for and a space for foot placement of the driver.

On the other hand, a scooter vehicle is disclosed in Japanese Patent Application Laid-open No. 2015-45244. The scooter vehicle includes a down frame and a lower frame. The down frame is inclined rearwardly and downwardly from a head pipe. The lower frame extends substantially horizontally from the rear end of the down frame.

A step floor is disposed above the lower frame. A unit swing type power unit is vertically and swingably supported at the rear end of the lower frame. The power unit includes an engine, a rear wheel and a belt type continuously variable transmission.

Disposing the unit swing type power unit behind the step floor allows the step floor to be disposed at a low position, thereby ensuring the driver's ease of getting on and off the vehicle.

In addition, since the unit swing type power unit is disposed behind the step floor, the power unit does not interfere with the disposition of the step floor. Therefore, it is possible to form the step floor widely in the vehicle width direction and the vehicle front-rear direction. That is, in the scooter vehicle, as compared with the underbone vehicle, the space for placing the foot when the driver rides is wide because the location of the power unit is different, and therefore the degree of freedom for foot movement is extremely high.

In the scooter vehicle, an air cleaner device is mounted on an upper portion of the power unit. Therefore, the air cleaner device rocks up and down together with the unit swing type power unit.

As described above, the underbone vehicle disclosed in Japanese Patent Application Laid-open No. 2011-174428 and the scooter vehicle disclosed in Japanese Patent Application Laid-open No. 2015-45244 differ significantly from each other in the basic vehicle structure such as the frame structure, the engine, and the layout of the air cleaner.

The prior art document EP 2 236 339 A1 discloses the features of the preamble of claim 1.

### SUMMARY

In developing an underbone vehicle, the present inventor noticed that there is a problem to pay particular attention not only in the scooter vehicle but also in the underbone vehicle. That problem is the ingress of mud into the air cleaner. In the scooter vehicle, the necessity to decrease the entry of water and mud into the air cleaner is great. In the scooter vehicle, the air cleaner swings together with the unit swing type power unit. Therefore, the air cleaner and the wheel (rear wheel) are arranged very close to each other in order to secure a clearance with a member (for example, a seat) that is located above the swinging air cleaner and the unit swing type power unit. For example, in a side view of the vehicle, the air cleaner and the wheel (rear wheel) are arranged close to each other so as to overlap. Therefore, water and mud thrown up by the rear wheel easily enters the air cleaner.

On the other hand, the present inventor initially thought that it was harder for water and mud to enter into the air cleaner in the underbone vehicle than in the scooter vehicle. In the underbone vehicle, the air cleaner is attached to the main frame in a non-swingable manner. Given this configuration, compared to the scooter vehicle, the air cleaner is not close to the wheel (front wheel) and therefore the influence of water and mud thrown up from the wheel (front wheel) is thought to be less.

In addition, an engine is disposed below the air cleaner, and the sides and upper sides of the air cleaner is surrounded by a cover, resulting in the air cleaner being disposed in a recessed space. Thus, in the underbone vehicle, the present inventor conceived that it is difficult for water and mud to enter into the air cleaner.

However, upon closer examination of this idea, the present inventor has conceived that particular attention should be paid to the ingress of water and mud into the air cleaner even in the underbone vehicle. In the underbone vehicle, the air cleaner is disposed below the main frame which extends from the head pipe. As a result, water and mud from the front wheel adheres to the head pipe or the main frame and is guided to the rear by the main frame. Then, the present inventor thought that it is necessary to pay attention to the fact that the water and mud passes through a space between the main frame and the cover arranged around the main frame and enters the air cleaner.

Moreover, in the underbone vehicle, the front cover is smaller compared to the front wheel. Accordingly, it is difficult for the front cover to block the water and mud splashed by oncoming vehicles and vehicles running in parallel. It is for this reason that the present inventor realized that it is necessary to pay attention to the fact that water and mud splashed by oncoming vehicles and parallel running vehicles will adhere to the head pipe or the main frame.

Therefore, the present inventor first considered to further decrease the ingress of water and mud by forming a complicated labyrinth structure in the air cleaner, or by changing the structure (shape) of the main frame. However, the structure of the air cleaner or the main frame may become complicated, and the air cleaner or the main frame may become large. If the size of the air cleaner or the main frame increases, the concave portion recessed downward from the seat becomes smaller, and therefore the ease of getting on and off the vehicle for the driver may decline.

As a result, the present inventor thought of decreasing the adhesion of the water and mud onto the head pipe or the main frame, instead of blocking the ingress of the water and mud adhering to the head pipe or the main frame. The present inventor has conceived that by forming a protruding portion protruding downward from the leg shield portion which is disposed more forward than the concave portion, it is possible to decrease the ingress of water and mud into the air cleaner without affecting the driver's ease of getting on and off the vehicle.

In addition, the present inventor has conceived that the protruding portion, in a side view of the vehicle, can be disposed so as to overlap with at least a portion of the head pipe located more upward than the air cleaner or overlap with a portion of the main frame located more upward than the air cleaner, and that the front end of the protruding portion is disposed more forward than the front end of the air cleaner. It is thereby possible to effectively decrease the adhesion of water and mud to the head pipe or the main frame without affecting the driver's ease of getting on and off the vehicle.

Furthermore, the present inventor has conceived that at least a portion of the protruding portion can be disposed more inward in the vehicle width direction than the outer lateral edge of the air cleaner. Thereby, the protruding portion is brought closer to the head pipe and the main frame, and it is possible to decrease the ingress of the water and mud into the space between the protruding portion and the head pipe and the main frame in the vehicle width direction.

In addition, the present inventor tried to devise the invention with ingenuity. The present inventor considered forming a storage portion using the protruding portion. Due to the fact that a certain amount of capacity is required in the storage portion, the present inventor first thought to secure the capacity of the storage portion by projecting the protruding portion further downward. However, the underbone vehicle is equipped with a large front fender; hence the present inventor realized that it will be difficult to project the protruding portion further downward because forming the protruding portion to project further downward will interfere with the front fender. Then, when attempting to secure the capacity of the storage portion, there is concern that a part of the storage portion will protrude rearwardly (the wall of the storage portion needs to be projected rearward) which interferes the degree of freedom of foot movement. In the underbone vehicle, using the protruding portion to form the storage portion seems extremely difficult for the present inventor, in addition to the fact that the degree of freedom of foot movement is already low.

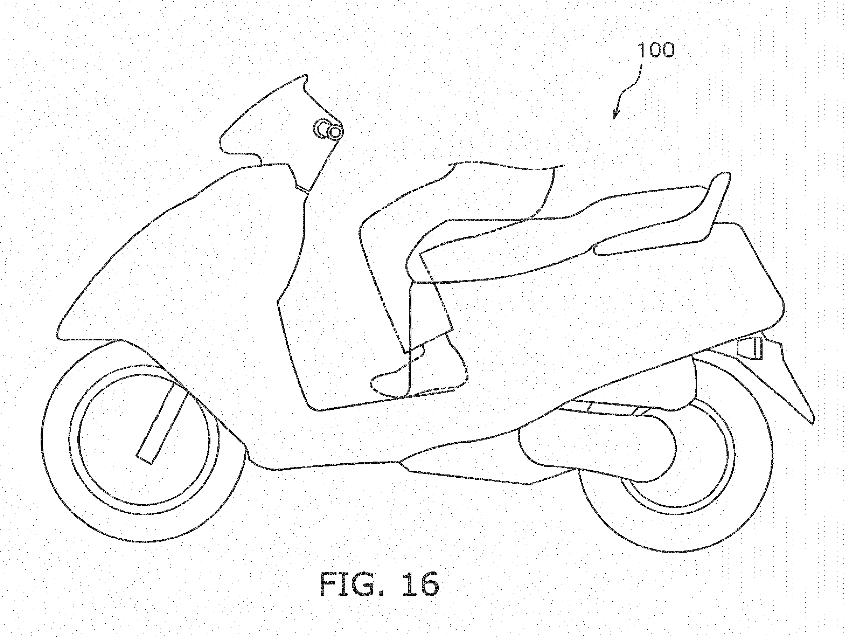

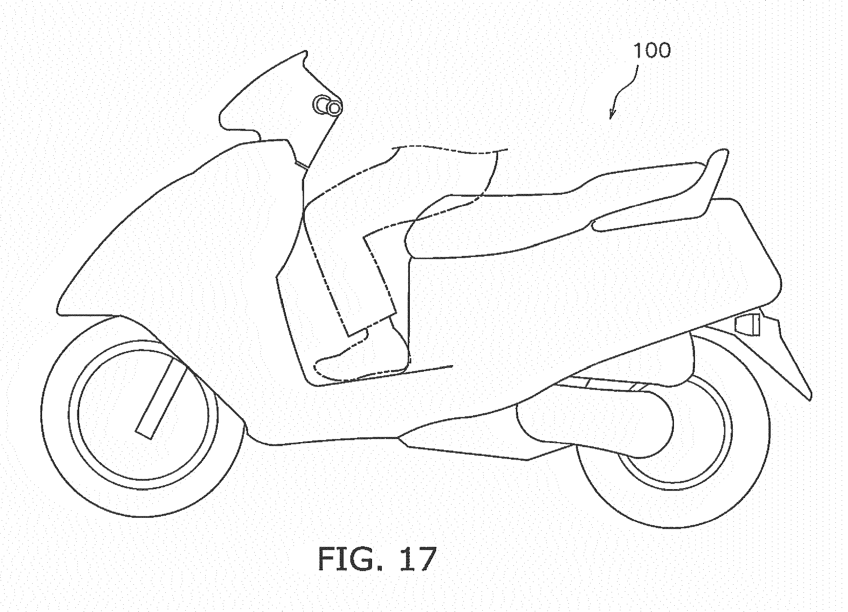

Here, the present inventor changed his concept. The present inventor carefully considered how the foot moves in the underbone vehicle. The scooter vehicle has a high degree of freedom to move the foot. In other words, the scooter vehicle has a foot placement (flat foot board) that is wide in the front-rear direction, and therefore the driver has a high degree of freedom to move the position of the foot in the front-rear direction. For this reason, taking into consideration the movement of the foot, as shown in FIGS. 16 and 17, the position of the knee also moves in the front-rear direction with the movement of the foot in the front-rear direction. When the position of the knee moves in the front-rear direction along with the movement of the foot in the front-rear direction, the height of the knee moves basically at the approximately same height position in the front-rear direction. It is to be noted that FIG. 16 is a diagram illustrating a position of the driver's foot at a general seating position in a scooter vehicle 100 according to a conventional technique. FIG. 17 shows a state in which the driver is seated at a position more forward than the seating position in FIG. 16 in the scooter vehicle 100.

On the other hand, in the underbone vehicle, the driver has a very low degree of freedom to move the foot. The footrest portion of the underbone vehicle has a bar shape in which the dimension in the vehicle front-rear direction is less than the dimension in the vehicle width direction. As a result, in the underbone vehicle, there is hardly any space for moving the foot in the front-rear direction. Further, the footrest portion is disposed more rearward than the front end of the engine. Therefore, the driver does not ride with the knees extended, but instead rides with the knees bent to some extent due to the footrest portion that is not being disposed much frontward. As a result, in the underbone vehicle, when the driver changes a riding posture, the knee is moved in the front-rear direction with the foot serving as the fulcrum without moving the foot.

The present inventor noticed that in the underbone vehicle, when the driver moves the knee forward with the foot serving as the fulcrum, the knee moves forward and downward.

In the underbone vehicle, when the driver moves the knee forward with the foot serving as the fulcrum, the knee moves forward and downward. Therefore, the present inventor found that by disposing the storage portion at a high position, it is possible to restrain the influence on the movement of the foot even if the storage portion somewhat protrudes to the rear. Conventionalty, it was considered that the low freedom of foot movement was a drawback of the underbone vehicle compared with that of the scooter vehicle. However, the present inventor conceived the present invention by converting this idea and turn the drawback into an advantage in forming the storage portion using the protruding portion.

An object of the present invention is to decrease the ingress of water and mud into the air cleaner while ensuring a driver's ease of getting on and off in an underbone vehicle. Another object of the present invention is to form a storage portion in a underbone vehicle by using a protruding portion to decrease the ingress of water and mud into the air cleaner while restraining a decline in the degree of freedom of a driver's foot movement.

An underbone vehicle according to one aspect of the present invention includes a head pipe, a front cover, a seat, a main frame, a steering device, an engine, an air cleaner, a footrest bar, a front fender, a concave portion, a leg shield, and a protruding portion. The head pipe is disposed at the center of the vehicle in a vehicle width direction. The front cover is disposed in front of the head pipe. The seat is arranged more rearward than the head pipe. The main frame extends rearward and downward from the head pipe toward a position lower than the seat.

The steering device includes a handle operated by a driver, a front fork, and a front wheel. The handle is disposed more upward than the head pipe and more forward than the seat. The front fork is inserted into the head pipe. The front wheel is supported by the front fork. The steering device is rotatably supported by the head pipe in accordance with the operation of the steering device.

The engine is disposed below the main frame. The engine is supported by the main frame in a non-swingable manner. The engine is arranged such that at least a portion thereof is disposed frontward of the seat. The air cleaner is supported by the main frame. The air cleaner is arranged such that at least a portion thereof is disposed between the main frame and the engine in the vehicle up-down direction.

The footrest bar is the portion where the driver puts his feet. The footrest bar is disposed more rearward than the front end of the engine and further lower than the seat and the main frame. At least a portion of the front fender is disposed between the upper end of the front wheel and the lower end of the front cover in the vehicle up-down direction. At least a portion of the front fender is disposed between the rear end of the front wheel and the front end of the engine in the vehicle front-rear direction.

The concave portion is disposed above the main frame. The concave portion has a shape which is recessed more downward than the seat. The leg shield is disposed more outward than the concave portion in the vehicle width direction. The leg shield is disposed more forward than the concave portion and the footrest bar. The protruding portion is disposed more forward than and above the footrest bar. The protruding portion protrudes downward from the leg shield toward the front fender.

In a front view of the vehicle, the dimension from the lower end of the front wheel to the lower end of the front cover in the vehicle up-down direction is greater than the dimension of the front cover in the vehicle up-down direction. In a side view of the vehicle, the protruding portion overlaps with at least a portion of the head pipe located more upward than the air cleaner or a portion of the main frame located more upward than the air cleaner. At least a portion of the protruding portion is disposed more inward than the outer lateral edge of the air cleaner in the vehicle width direction.

The footrest bar has a rod-like shape in which the dimension in the vehicle front-rear direction is less than the dimension in the vehicle width direction. A front end of the protruding portion is disposed more forward than the front end of the air cleaner. The protruding portion is a part of the storage portion having a space for storing articles. The storage portion protrudes rearward from the leg shield. The lower end of the protruding portion is located above the lower end of the concave portion.

The underbone vehicle according to the present aspect is capable of decreasing the ingress of the water and mud into the air cleaner by the protruding portion. Therefore, it is possible to limiting the size of the air cleaner from becoming large, thereby ensuring a driver's ease of getting on and off the vehicle. In addition, the storage portion can be formed by utilizing the protruding portion. Furthermore, since the protruding portion is disposed at a position higher than the lower end of the concave portion, a decline in the degree of freedom of foot movement can be restraining while ensuring a large capacity of the storage portion.

The lower end of the protruding portion may be positioned lower than the upper end of the air cleaner. In this case, the ingress of the water and mud into the air cleaner can be further decreased by the protruding portion.

The outer lateral end of the protruding portion may be disposed more laterally outward than the outer lateral edge of the air cleaner. In this case, the ingress of the water and mud into the air cleaner can be further decreased by the protruding portion.

The storage portion has no lid, and may have an opening facing upwards. In this case, the storage portion can be downsized. In addition, the storage portion affecting the concave portion can be reduced, thereby making it possible to restrain a decline in the ease of getting on and off the vehicle.

The underbone vehicle may further include a lamp disposed on the front cover. In a front view of the vehicle, at least a portion of the protruding portion may overlap with the lamp at a position more laterally inward than the outer lateral edge of the air cleaner. In this case, the protruding portion, together with the lamp, is capable of decreasing ingress of water and mud into the air cleaner.

The leg shield may include a first portion and a second portion. The first portion may extend forward and downward. The second part may be connected to the first portion and extend rearward and downward. The length of the first portion in the extending direction of the first portion may be shorter than the length of the second portion in the extending direction of the second portion. The opening of the storage portion may be disposed behind the first portion. In this case, the rearward protrusion of the storage portion can be limited to a small extent, thereby restraining a decline in the ease of getting on and off the vehicle. In addition, the influence on the movement of the foot caused by the storage portion during riding may be reduced, thereby restraining a decline in the comfort of riding.

At least a portion of the protruding portion may overlap with the air cleaner in a plan view of the vehicle. In this case, the ingress of water and mud into the air cleaner can be further decreased by the protruding portion.

In a side view of the vehicle, the lower end of the protruding portion may be located further lower and forward than the upper end of the air cleaner. The protruding portion may include a rear wall located above the air cleaner. The rear wall portion may extend rearward and upward from the lower end of the protruding portion in a side view of the vehicle. In this case, the ingress of water and mud into the air cleaner can be further decreased by the rear wall portion. Additionally, it is possible to enlarge the space of the storage portion while avoiding interference with the air cleaner.

In a side view of the vehicle, the protruding portion may include a bottom wall portion extending forward and upward from the lower end of the protruding portion. In this case, it is possible to enlarge the space of the storage portion while avoiding interference with the front fender.

The underbone vehicle may further include a steering cover. The steering cover may extend upwardly and rearwardly from the front end of the concave portion. The storage portion may be located more frontward than the rear edge of the steering cover in a side view of the vehicle. In this case, the rearward protrusion of the storage portion is limited, thereby restraining a decline in the ease of getting on and off the vehicle.

The underbone vehicle may further include a pedal operated by the driver's foot. The pedal may be disposed in front of or behind the footrest bar. In this case, the driver moves the foot below the knee about the footrest bar to operate the pedal. As a result, the driver is capable of operating the pedal without hindering the storage portion.

### BRIEF DESCRIPTION OF THE DRAWINGS

FIG. 1 is a perspective view of an underbone vehicle according to a preferred embodiment of the present invention.
FIG. 2 is a side view of the underbone vehicle.
FIG. 3 is a front view of the underbone vehicle.
FIG. 4 is a perspective view of a front fork and a front wheel.
FIG. 5 is a plan view of the underbone vehicle.
FIG. 6 is a front view of the underbone vehicle in which a front wheel, a steering device, and a front fender are omitted.
FIG. 7 is a rear view of an air cleaner.
FIG. 8 is a side view illustrating a structure of the air cleaner and the periphery thereof.
FIG. 9 is a side view illustrating a storage portion and the periphery thereof.
FIG. 10 is a perspective view illustrating the storage portion and the periphery thereof.
FIG. 11 is a view of the storage portion and the periphery thereof as viewed from the rear.
FIG. 12 is a sectional view taken along the line XII - XII in FIG. 10.
FIG. 13 is a view of a leg shield and an inner protruding portion as viewed from the front.
FIG. 14 is a diagram illustrating an example of a riding posture of a driver on an underbone vehicle.
FIG. 15 is a diagram illustrating an example of a riding posture of a driver on an underbone vehicle.
FIG. 16 is a diagram illustrating an example of a riding posture of a driver on a scooter vehicle.
FIG. 17 is a diagram illustrating an example of a riding posture of a driver on a scooter vehicle.

### DETAILED DESCRIPTION OF THE PREFERRED EMBODIMENTS

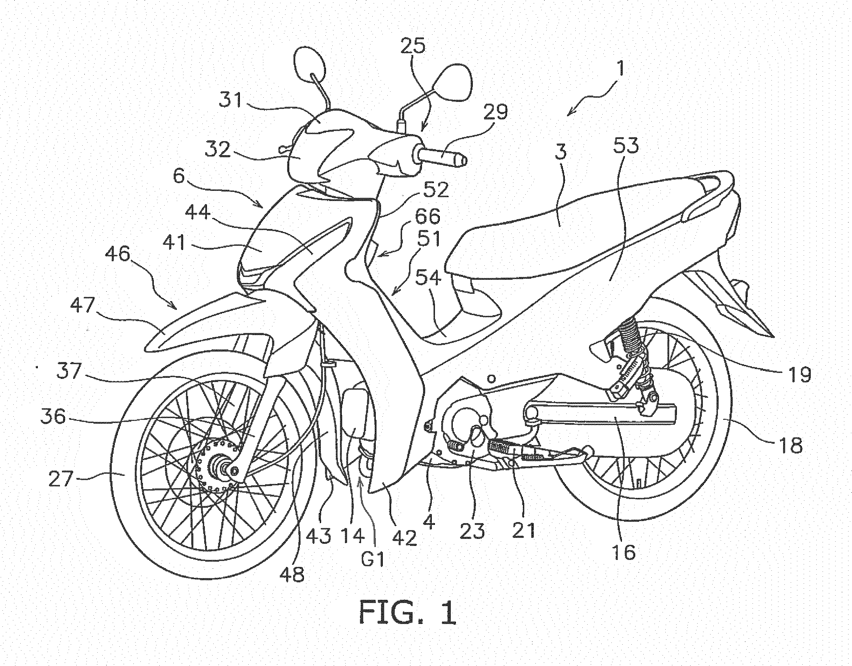

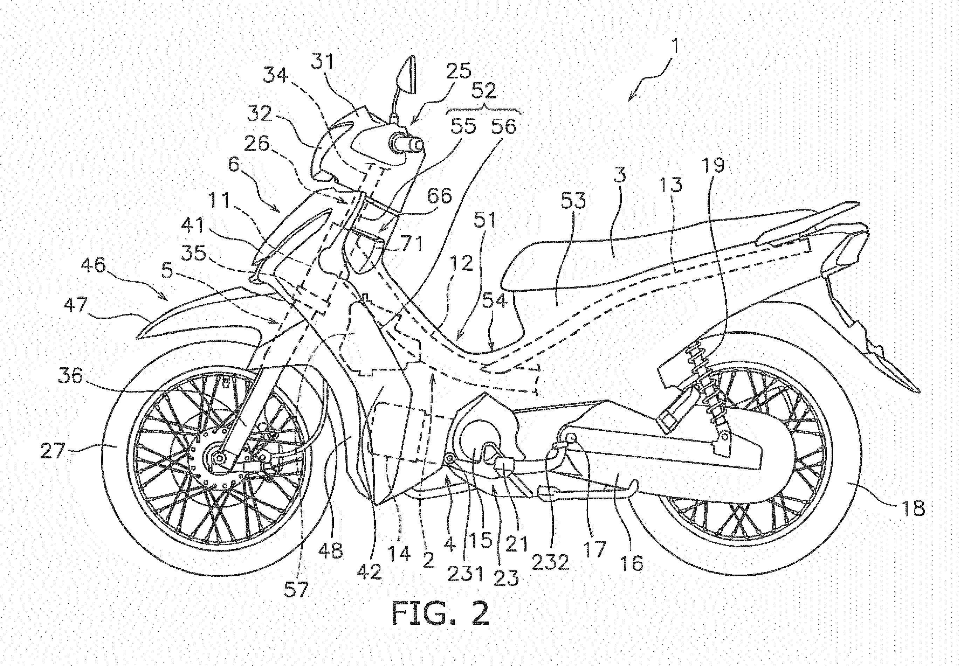

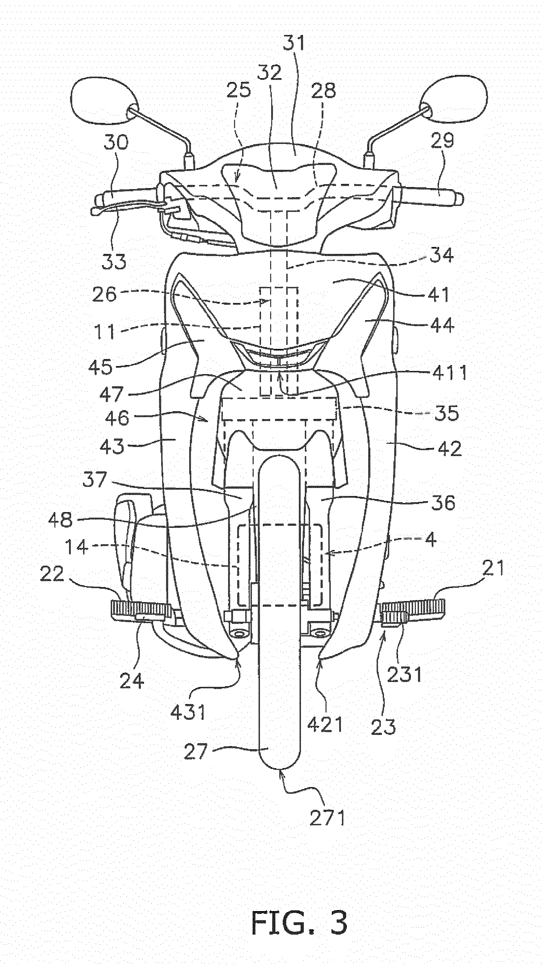

Hereinafter, an underbone vehicle according to a preferred embodiment of the present invention will be described with reference to the drawings. FIG. 1 is a perspective view of an underbone vehicle 1 according to the preferred embodiment of the present invention. FIG. 2 is a side view of the underbone vehicle 1. FIG. 3 is a front view of the underbone vehicle 1.

As shown in FIG. 2, the underbone vehicle 1 includes a vehicle body frame 2, a seat 3, an engine 4, a steering device 5, and a vehicle body cover 6. The vehicle body frame 2 includes a head pipe 11, a main frame 12, and a rear frame 13.

The head pipe 11 is disposed at the vehicle center in the vehicle width direction. The head pipe 11 extends rearward and upward. The main frame 12 extends rearward and downward from the head pipe 11 toward a position lower than the seat 3. The rear frame 13 extends rearward and upward from the main frame 12.

The seat 3 is disposed more rearward than the head pipe 11. The seat 3 is disposed above the rear frame 13. In the present embodiment, the front, back, left and right directions refer to the direction as seen by the driver seated on the seat 3.

The engine 4 is disposed below the main frame 12. The engine 4 is fixed to the main frame 12 in a non-swingable manner. The engine 4 is arranged such that at least a portion thereof is disposed frontward of the seat 3. Specifically, the engine 4 includes a cylinder 14 and a crankcase 15. The cylinder 14 is disposed in front of the crankcase 15. The cylinder 14 is disposed frontward of the seat 3. The cylinder axis of the cylinder 14 extends in the front-rear direction.

In the present specification, the term "extending in the front-rear direction" is not limited to extending in parallel to the front-rear direction. "Extending in the front-rear direction" denotes that the smaller angle among the angles formed by extension with the horizontal direction is 45° or less. That is, the term "extending in the front-rear direction" includes a case of extending in a direction inclined with respect to the horizontal direction. The same applies to "extending in the left-right direction" and "extending in the up-down direction".

A rear arm 16 is disposed behind the engine 4. The rear arm 16 is rotatably supported around a pivot shaft 17. The rear arm 16 is supported by the body frame 2 or the engine 4. The rear arm 16 rotatably supports a rear wheel 18. The rear arm 16 is supported by the rear frame 13 via a rear suspension 19.

The underbone vehicle 1 includes a left footrest bar 21 and a right footrest bar 22. The left footrest bar 21 and the right footrest bar 22 are disposed more rearward than the front end of the engine 4 and below the seat 3 and the main frame 12. The left footrest bar 21 and the right footrest bar 22 are portions where the driver puts his or her feet respectively. The left footrest bar 21 is disposed on the left side of the engine 4. The right footrest bar 22 is disposed on the right side of the engine 4. The left footrest bar 21 and the right footrest bar 22 extend in the left-right direction. The left footrest bar 21 and the right footrest bar 22 each have a shape that is longer in the left-right direction than in the front-rear direction.

The underbone vehicle 1 includes a shift pedal 23. The shift pedal 23 is a member for the driver to shift the transmission. The transmission is connected to the crankcase 15 described above. The shift pedal 23 is disposed side by side with the left footrest bar 21 in the front-rear direction. Specifically, the shift pedal 23 includes a front shift pedal 231 and a rear shift pedal 232. The front shift pedal 231 is disposed in front of the left footrest bar 21. The rear shift pedal 232 is disposed behind the left footrest bar 21.

As shown in FIG. 3, the underbone vehicle 1 includes a brake pedal 24. The brake pedal 24 is disposed in front of the right footrest bar 22.

As shown in FIG. 2, the steering device 5 includes a handle 25, a front fork 26, and a front wheel 27. The handle 25 is disposed more upward than the head pipe 11 and more forward than the seat 3. The handle 25 is connected to an upper end of the front fork 26. As shown in FIG. 3, the handle 25 includes a handle bar 28, a left grip 29, and a right grip 30.

The handle bar 28 is connected to the front fork 26. The handle bar 28 is covered with a handle cover 31. A headlight 32 is attached to the handle cover 31. The left grip 29 is attached to the left end of the handlebar 28. The right grip 30 is attached to the right end of the handlebar 28. A brake lever 33 is disposed in front of the right grip 30.

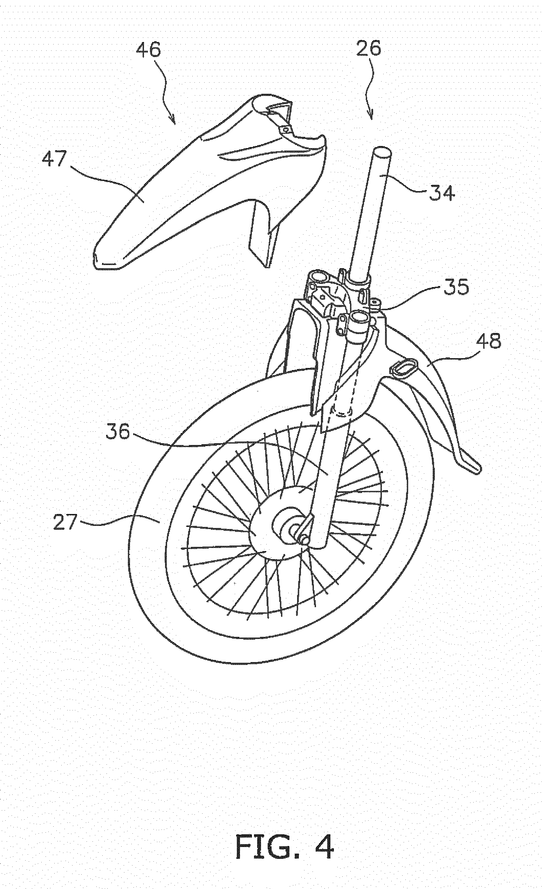

The front fork 26 is inserted in the head pipe 11 and is rotatably supported by the head pipe 11. The front wheel 27 is rotatably supported by the front fork 26. FIG. 4 is a perspective view of the front fork 26 and the front wheel 27. As shown in FIGS. 3 and 4, the front fork 26 includes a steering shaft 34, a bracket 35, a left suspension 36, and a right suspension 37.

The upper end of the steering shaft 34 is connected to the handle 25. The steering shaft 34 is inserted in the head pipe 11 and is rotatably supported by the head pipe 11. The lower end of the steering shaft 34 is connected to the bracket 35.

The upper end of the left suspension 36 and the upper end of the right suspension 37 are connected to the bracket 35. The lower end of the left suspension 36 and the lower end of the right suspension 37 rotatably support the front wheel 27. Upon operation of the handle 25 by the driver, the steering device 5 rotates left and right.

The vehicle body cover 6 includes a front cover 41, a left side cover 42, and a right side cover 43. The front cover 41 is disposed in front of the head pipe 11. As shown in FIG. 3, the front cover 41 overlaps with the head pipe 11 as viewed from the front of the vehicle. The front cover 41 is located more upward than the front wheel 27.

The underbone vehicle 1 includes a left lamp unit 44 and a right lamp unit 45. At least a portion of the left lamp unit 44 is disposed on the front cover 41. At least a portion of the right lamp unit 45 is disposed on the front cover 41. The left lamp unit 44 includes, for example, a left flasher. The right lamp unit 45 includes, for example, a right flasher. The left and right lamp units may include a position light.

The left side cover 42 and the right side cover 43 extend downward from the front cover 41. The left side cover 42 and the right side cover 43 extend to a position below the rotation center of the front wheel 27. As shown in FIG. 3, at least a portion of the left side cover 42 is located on the left side of the front wheel 27 as viewed from the front of the vehicle. At least a portion of the right side cover 43 is located on the right side of the front wheel 27 as viewed from the front of the vehicle.

As shown in FIG. 3, in the vehicle front view, the dimension from a lower end 271 of the front wheel 27 to a lower end 411 of the front cover 41 in the vehicle up-down direction is greater than the dimension of the front cover 41 in the vehicle up-down direction. In the front view of the vehicle, the dimension from a lower end 421 of the left side cover 42 to the lower end 411 of the front cover 41 in the vehicle up-down direction is greater than the dimension of the front cover 41 in the vehicle up-down direction. In the front view of the vehicle, the dimension from a lower end 431 of the right side cover 43 to the lower end 411 of the front cover 41 in the vehicle up-down direction is greater than the dimension of the front cover 41 in the vehicle up-down direction.

The vehicle body cover 6 includes a front fender 46. The front fender 46 is disposed below the front cover 41. The front fender 46 is disposed above the front wheel 27 and the rear side of the front wheel 27. More specifically, at least a portion of the front fender 46 is located between the upper end of the front wheel 27 and the lower end 411 of the front cover 41 in the vehicle up-down direction. At least a portion of the front fender 46 is located between the rear end of the front wheel 27 and the front end of the engine 4 in the vehicle front-rear direction.

As shown in FIG. 4, the front fender 46 includes a first fender portion 47 and a second fender portion 48. The first fender portion 47 is disposed above the front wheel 27. The first fender portion 47 extends to a position more forward than the upper end of the front wheel 27. The second fender portion 48 is disposed behind the front wheel 27. The second fender portion 48 extends to a position lower than the rear end of the front wheel 27.

As shown in FIG. 3, the front fender 46 overlaps with the engine 4 as viewed from the front of the vehicle. More specifically, the second fender portion 48 overlaps with the cylinder 14 as viewed from the front of the vehicle.

The vehicle body cover 6 includes a central cover 51, a leg shield 52, and a rear cover 53. The central cover 51 is disposed at the center of the vehicle in the vehicle width direction. The central cover 51 is disposed behind the front cover 41. The central cover 51 is disposed in front of the seat 3. At least a portion of the central cover 51 is disposed behind the head pipe 11. At least a portion of the central cover 51 is disposed above the main frame 12. At least a portion of the central cover 51 is disposed on the left side and the right side of the main frame 12. At least a portion of the central cover 51 overlaps with the main frame 12 in a side view of the vehicle.

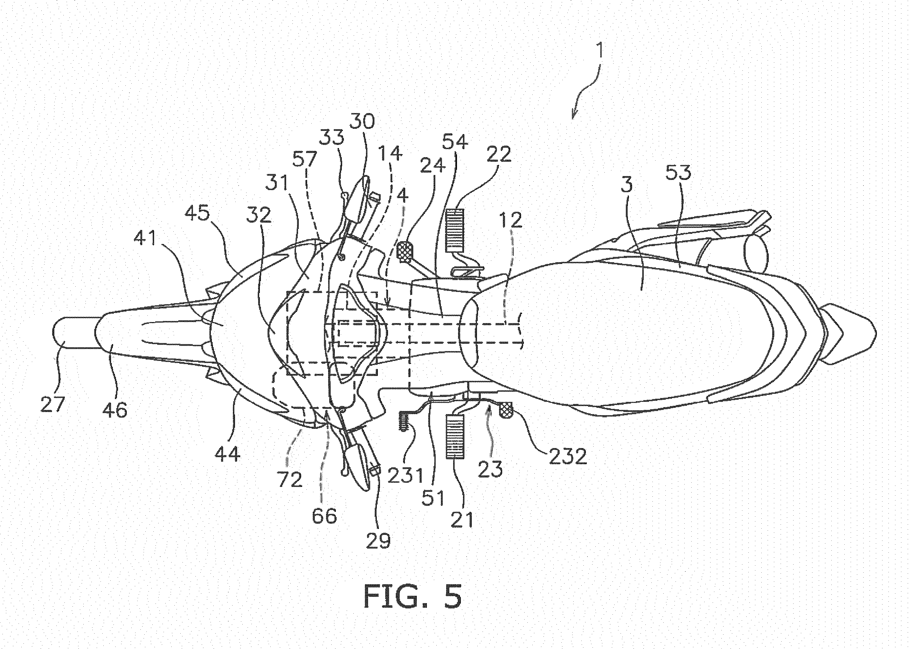

FIG. 5 is a plan view of the underbone vehicle 1. As shown in FIG. 5, at least a portion of the central cover 51 overlaps with the main frame 12 in the plan view of the vehicle.

The central cover 51 includes a concave portion 54. The concave portion 54 has a shape that is recessed downward as viewed from a side of the vehicle. The concave portion 54 is disposed above the main frame 12. The engine 4 is disposed below the concave portion 54. In the plan view of the vehicle, the concave portion 54 overlaps with the engine 4.

The concave portion 54 has a shape recessed to a position lower than the seat 3. That is, the lower end of the concave portion 54 is located lower than the seat 3. The lower end of the concave portion 54 is located more upward than the rotation center of the front wheel 27. The lower end of the concave portion 54 is located more upward than the upper end of the engine 4. The footrest portion described above is located lower than the lower end of the concave portion 54.

The leg shield 52 is disposed behind the front cover 41, the left side cover 42, and the right side cover 43. The leg shield 52 is disposed more forward than the seat 3. The leg shield 52 is disposed more forward than the concave portion 54. The leg shield 52 is disposed more forward than the footrest bars 21, 22.

The leg shield 52 includes a first portion 55 and a second portion 56. The first portion 55 extends forward and downward in a side view of the vehicle. The second portion 56 is disposed below the first portion 55. The second portion 56 is coupled to the first portion 55 and extends rearward and downward. The length of the first portion 55 in the extending direction of the first portion 55 is shorter than the length of the second portion 56 in the extending direction of the second portion 56. That is, the length of the first portion 55 along the first portion 55 is shorter than the length of the second portion 56 along the second portion 56.

The leg shield 52 is disposed on the left and right sides of the central cover 51. The leg shield 52 is disposed more outward in the vehicle width direction than the concave portion 54. That is, a portion of the leg shield 52 is disposed further left than the concave portion 54. Furthermore, a portion of the leg shield 52 is disposed further right than the concave portion 54. Note that the term "outward in the vehicle width direction" denotes a direction away from the center of the underbone vehicle 1 in the vehicle width direction.

The rear cover 53 is disposed below the seat 3. The rear cover 53 is disposed behind the concave portion 54. The rear cover 53 is disposed on the left and right sides of the rear frame 13. In a side view of the vehicle, at least a portion of the rear cover 53 is disposed between the rear wheel 18 and the seat 3 in the vehicle up-down direction.

The underbone vehicle 1 includes an air cleaner 57. The air cleaner 57 is disposed above the engine 4. The air cleaner 57 is connected to the engine 4. The air cleaner 57 is non-swingably fixed to the main frame 12. At least a portion of the air cleaner 57 is disposed between the main frame 12 and the engine 4 in the vehicle up-down direction. At least portion of the air cleaner 57 is located between the front end and the rear end of the engine 4 in the vehicle front-rear direction. The rear end of the air cleaner 57 is located more rearward than the front end of the engine 4. The front end of the air cleaner 57 is located more forward than the front end of the engine 4.

At least a portion of the central cover 51 is disposed above the air cleaner 57. At least a portion of the central cover 51 is disposed on the left side and the right side of the air cleaner 57. In the plan view of the vehicle, at least a portion of the central cover 51 overlaps with the air cleaner 57. In the side view of the vehicle, at least a portion of the central cover 51 overlaps with the air cleaner 57.

In the side view of the vehicle, at least a portion of the air cleaner 57 overlaps with the main frame 12. At least a portion of the air cleaner 57 is disposed below the main frame 12. In other words, in the plan view of the vehicle, at least a portion of the air cleaner 57 overlaps with the main frame 12. At least a portion of the air cleaner 57 is disposed behind the bracket 35. That is, at least a portion of the air cleaner 57 overlaps with the bracket 35 in the front view of the vehicle.

At least a portion of the air cleaner 57 is disposed below the concave portion 54. That is, in the plan view of the vehicle, at least a portion of the air cleaner 57 overlaps with the concave portion 54. At least a portion of the air cleaner 57 is disposed in front of the concave portion 54. That is, at least a portion of the air cleaner 57 overlaps with the concave portion 54 in the front view of the vehicle.

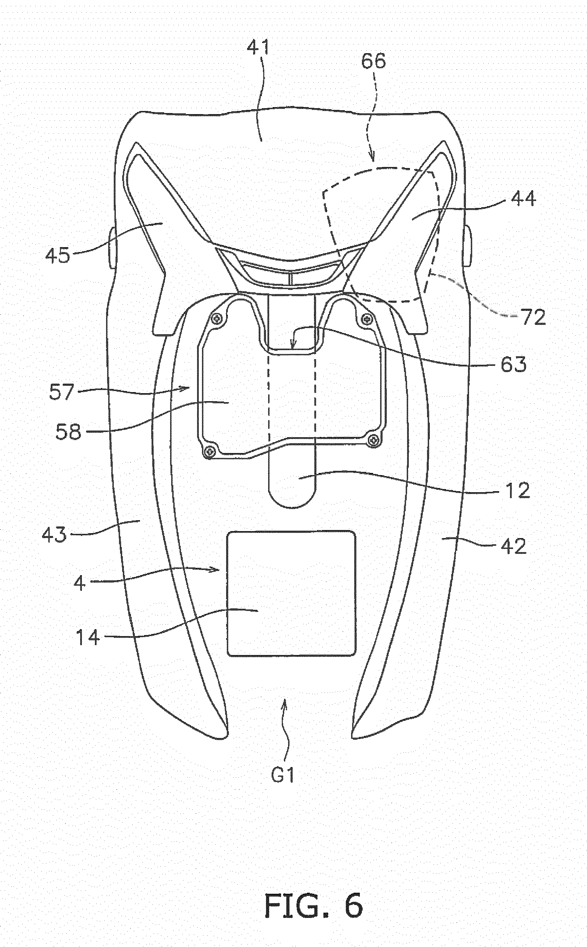

FIG. 6 is a front view of the underbone vehicle 1 in which the front wheel 27, the steering device 5, and the front fender 46 are omitted. At least a portion of the air cleaner 57 is disposed in front of the main frame 12. That is, as shown in FIG. 6, at least a portion of the air cleaner 57 overlaps with the main frame 12 in the front view of the vehicle.

As shown in FIG. 1, a gap G1 is provided between the left side cover 42 and the right side cover 43. As shown in FIG. 6, the engine 4 and the air cleaner 57 are disposed between the left side cover 42 and the right side cover 43 in the front view of the vehicle. Therefore, the engine 4 and the air cleaner 57 are exposed to the open-air through the gap G1.

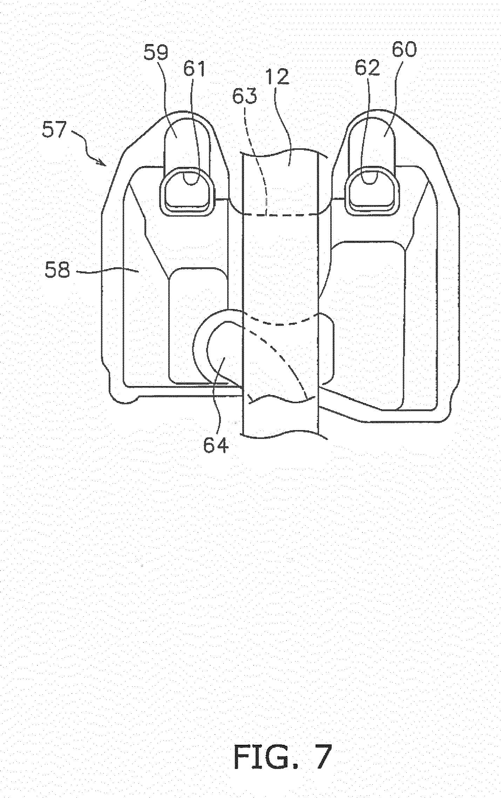

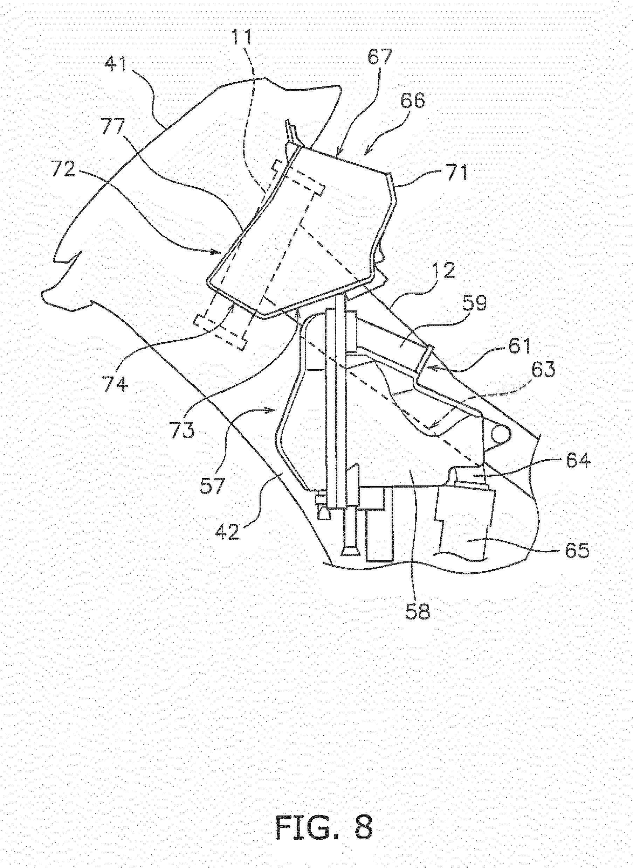

FIG. 7 is a rear view of the air cleaner 57. FIG. 8 is a side view showing the structure of the air cleaner 57 and the periphery thereof. As shown in FIG. 7, the air cleaner 57 includes a main body case 58, a left duct 59, and a right duct 60. The body case 58 has a space through which air passes, and an air filter (not shown) is accommodated therein. The left duct 59 and the right duct 60 are disposed above the main body case 58. The left duct 59 and the right duct 60 are arranged so as to be spaced apart from each other in the left-right direction.

The rear end of the left duct 59 includes a left intake port 61. The left intake port 61 is opened toward the rear. The left intake port 61 is in communication with the space inside the main body case 58 via a passage in the left duct 59. The rear end of the right duct 60 includes a right intake port 62. The right intake port 62 is opened toward the rear. The right intake port 62 is in communication with the space inside the main body case 58 via a passage in the right duct 60.

The upper surface of the main body case 58 includes a groove portion 63 recessed downward. The groove portion 63 is located between the left duct 59 and the right duct 60. As shown in FIG. 8, the groove portion 63 extends rearward and downward. A portion of the main frame 12 is disposed in the groove portion 63. An intake pipe 64 is connected to a rear portion of the main body case 58. The intake pipe 64 extends downward from the air cleaner 57. A throttle body 65 is disposed below the air cleaner 57. The intake pipe 64 is connected to the engine 4 via the throttle body 65.

As shown in FIG. 2, the underbone vehicle 1 includes a storage portion 66. The storage portion 66 has a space for storing articles. At least a portion of the storage portion 66 overlaps with the head pipe 11 in a side view of the vehicle. At least a portion of the storage portion 66 overlaps with the main frame 12 in the side view of the vehicle. At least a portion of the storage portion 66 is disposed above the air cleaner 57. A portion of the storage portion 66 is located between the front end and the rear end of the air cleaner 57 in the vehicle front-rear direction.

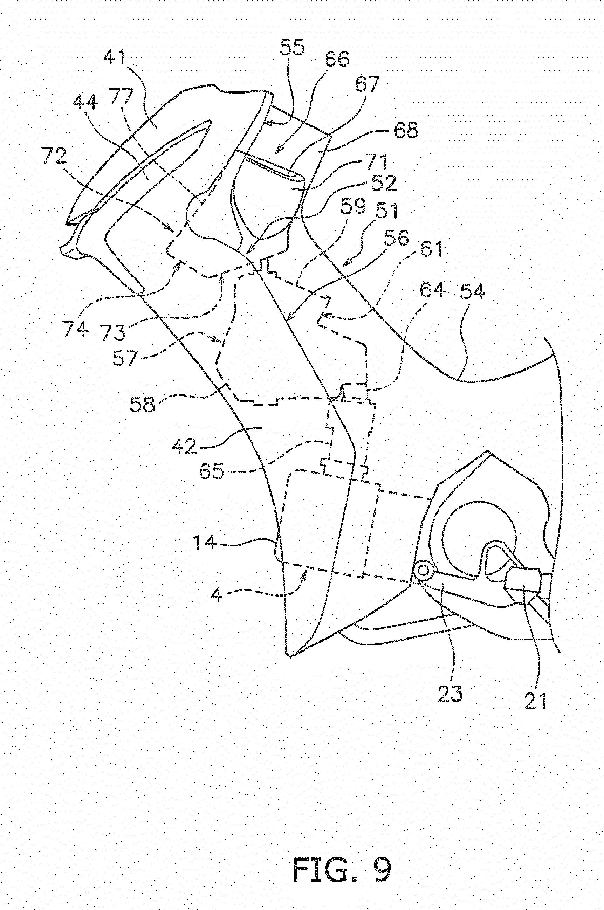

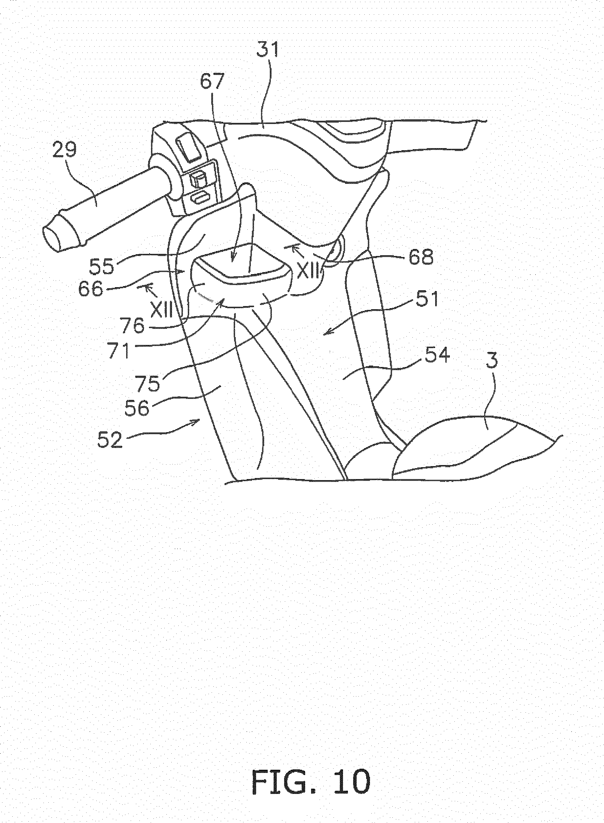

FIG. 9 is a side view illustrating the storage portion 66 and the periphery thereof. FIG. 10 is a perspective view illustrating the storage portion 66 and the periphery thereof. There is no lid on the storage portion 66, and is opened facing upwards. That is, the storage portion 66 includes an opening 67. The opening 67 is disposed behind the first portion 55. The opening 67 is disposed on the lateral side of the central cover 51.

More specifically, the central cover 51 includes a steering cover 68 located above the concave portion 54. The steering cover 68 extends upwardly and rearwardly from the front end of the concave portion 54 in a side view of the vehicle. The steering cover 68 protrudes rearward from the first portion 55 of the leg shield 52. The opening 67 is disposed on the lateral side of the steering cover 68.

The storage portion 66 includes an outer protruding portion 71 and an inner protruding portion 72. The outer protruding portion 71 protrudes rearward from the leg shield 52. The opening 67 is provided at the upper end of the outer protruding portion 71. The outer protruding portion 71 is disposed behind the first portion 55. The front end of the outer protruding portion 71 is coupled to the first portion 55. The outer protruding portion 71 is disposed on the lateral side of the steering cover 68. The inner lateral end of the outer protruding portion 71 is coupled to the steering cover 68.

The outer protruding portion 71 is located more frontward than the central cover 51 in a side view of the vehicle. More specifically, the outer protruding portion 71 is located more forward than the rear edge of the steering cover 68 in a side view of the vehicle. The lower end of the outer protruding portion 71 is located more upward than the lower end of the concave portion 54. The lower end of the outer protruding portion 71 is located more upward than the air cleaner 57. The lower end of the outer protruding portion 71 is located more upward than the bracket 35.

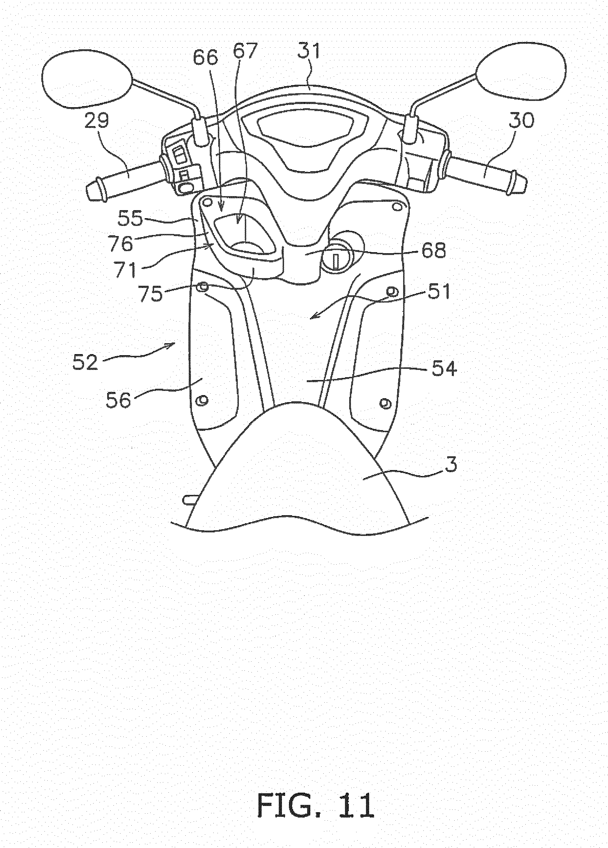

FIG. 11 is a view of the storage portion 66 and the periphery thereof as viewed from the rear. As shown in FIGS. 10 and 11, the outer protruding portion 71 includes a rear wall 75 and a side wall 76. The rear wall 75 extends in the vehicle width direction. The rear wall 75 is coupled to the steering cover 68. The rear wall 75 is located behind the opening 67.

The side wall 76 is coupled to the rear wall 75 and extends forward. The side wall 76 is located on the laterally outer side of the opening 67. The rear wall 75 and the side wall 76 are integrally formed with the leg shield 52. However, the rear wall 75 and the side wall 76 may be separate from the leg shield 52. The rear wall 75 and the side wall 76 appear on the outer appearance. The outer protruding portion 71 includes a space surrounded by the rear wall 75 and the side wall 76.

In more detail, the side wall 76 extends forward and laterally outward. This makes it possible to secure the capacity of the storage portion 66 while reducing the amount of rearward protrusion of the storage portion 66. It should be noted that the rear wall 75 may extend in the front-rear direction of the vehicle. The dimension of the outer protruding portion 71 in the vehicle width direction is greater than the dimension of the outer protrusion 71 in the vehicle front-rear direction. The dimension of the outer protruding portion 71 in the vehicle width direction is greater than the dimension of the leg shield 52 located on the lateral side of the outer protruding portion 71 in the vehicle width direction.

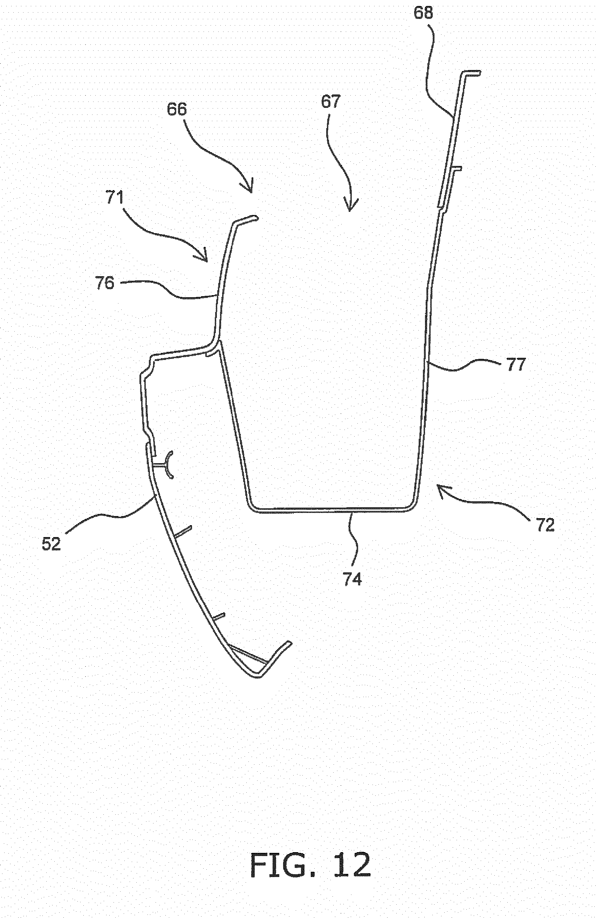

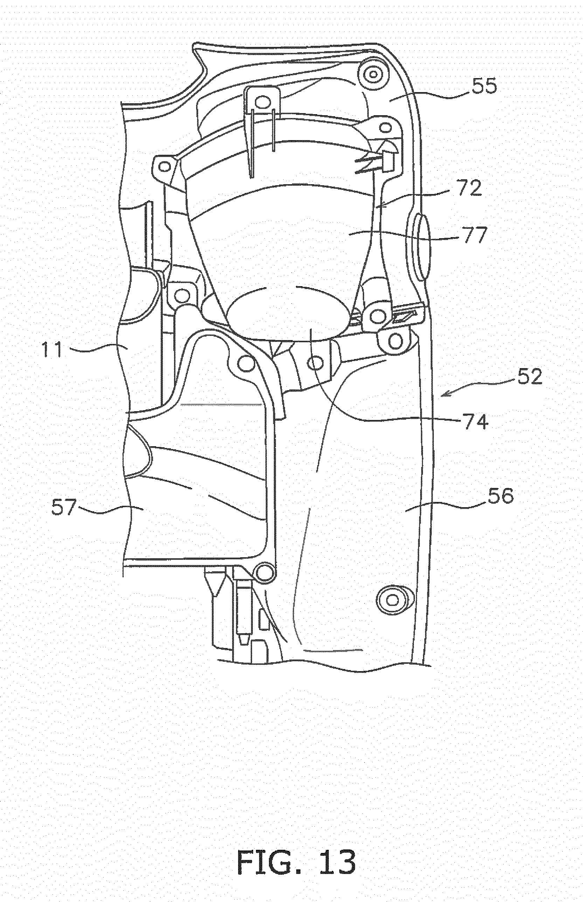

The inner protruding portion 72 is disposed inside the body cover 6. The inner protruding portion 72 is disposed behind the front cover 41. The inner protruding portion 72 is located in front of the leg shield 52. FIG. 12 is a sectional view taken along the line XII - XII in FIG. 10. FIG. 13 is a view of the leg shield 52 and the inner protruding portion 72 as viewed from the front. The inner protruding portion 72 is a separate body from the outer protruding portion 71. The inner protruding portion 72 is attached to the leg shield 52. However, the inner protruding portion 72 may be formed integrally with the outer protruding portion 71.

The inner protruding portion 72 projects downward from the leg shield 52 toward the front fender 46. The inner protruding portion 72 is disposed more forward and more upward than the footrest bars 21 and 22. The inner protruding portion 72 overlaps with at least a portion of the head pipe 11 In a side view of the vehicle. The inner protruding portion 72 overlaps with a portion of the main frame 12 in a side view of the vehicle. The inner protruding portion 72 includes a peripheral wall portion 77 and a bottom wall portion 74. The peripheral wall portion 77 surrounds the front and rear and left and right peripheries of the space in the inner protruding portion 72. The peripheral wall portion 77 extends rearward and upward from the bottom wall portion 74. The inner protruding portion 72 includes a space surrounded by the peripheral wall portion 77 and the bottom portion 74.

The lower end of the inner protruding portion 72 is located more upward than the lower end of the concave portion 54. The lower end of the inner protruding portion 72 is located more upward than the lower end of the head pipe 11. The lower end of the inner protruding portion 72 is located more upward than the lower end 411 of the front cover 41. The lower end of the inner protruding portion 72 is located lower and more forward than the upper end of the air cleaner 57.

The front end of the inner protruding portion 72 is disposed more forward than the front end of the air cleaner 57. The front end of the inner protruding portion 72 is disposed more forward than the front end of the main frame 12. The peripheral wall portion 77 includes a rear wall portion 73. The rear wall portion 73 extends rearward and upward from the lower end of the inner protruding portion 72 in a side view of the vehicle and is located above the air cleaner 57. The rear wall portion 73 overlaps with the head pipe 11 in the side view of the vehicle. The bottom wall portion 74 extends forward and upward from the lower end of the inner protruding portion 72 in the side view of the vehicle. The bottom wall portion 74 is located above the air cleaner 57 in the side view of the vehicle.

As shown in FIG. 5, at least a portion of the inner protruding portion 72 overlaps with the air cleaner 57 in a plan view of the vehicle. At least a portion of the inner protruding portion 72 overlaps with the handle cover 31 in the plan view of the vehicle. At least a portion of the inner protruding portion 72 overlaps with the front cover 41 in the plan view of the vehicle.

The inner protruding portion 72 is disposed behind the left lamp unit 44. As shown in FIG. 6, at least a portion of the inner protruding portion 72 overlaps with the left lamp unit 44 in the front view of the vehicle. At least a portion of the inner protruding portion 72 overlaps with the left lamp unit 44 at a position more laterally inward than the outer lateral edge of the air cleaner 57 in the front view of the vehicle. The outer lateral end of the inner protruding portion 72 is disposed more laterally outward than the outer lateral edge of the air cleaner 57.

In the underbone vehicle 1 according to the present embodiment described above, the inner protruding portion 72 is capable of decreasing the ingress of water and mud into the air cleaner 57. In addition, it is possible to decrease the ingress of water and mud while limiting the enlargement of the air cleaner 57, and therefore it is not necessary to narrow the concave portion 54. As a result, a decline in a driver's ease of getting on and off the vehicle can be restrained.

In addition, a portion of the storage portion 66 is constituted by the inner protruding portion 72. With this configuration, convenience can be improved by utilizing the inner protruding portion 72. A portion of the storage portion 66 protrudes rearward from the leg shield 52. As a result, it is possible to secure a large capacity of the storage portion 66.

On the other hand, disposing a portion of the storage portion 66 to protrude rearward from the leg shield 52 allows a large capacity of the storage portion 66 to be secured. Nevertheless, there is concern the storage portion 66 may hinder the movement of the driver's leg. However, in the underbone vehicle 1, the driver has a very low degree of freedom to move the foot. Therefore, even when the storage portion 66 as described above is provided, the probability that the storage portion 66 interferes with the movement of the foot of the driver can be reduced.

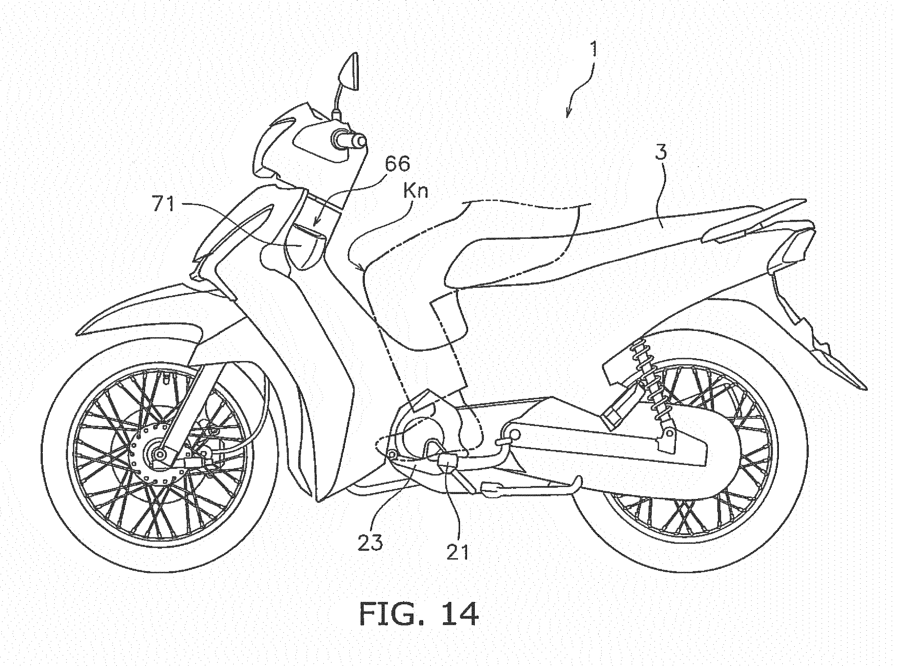

For example, FIG. 14 is a diagram illustrating a position of a driver's foot in a general seating position. In the underbone vehicle 1, the driver places his or her feet on the footrest bars 21 and 22. Further, the footrest bars 21 and 22 are disposed more rearward than the front end of the engine 4. That is, the footrest bars 21 and 22 are not located very far forward. Therefore, instead of riding with a knee Kn in an extended state, the driver will ride in a state in which the knee Kn is bent to some extent As shown in FIG. 14, the driver's knee Kn is distant rearwardly from the outer protruding portion 71 of the storage portion 66. Consequently, the storage portion 66 does not interfere with the movement of the foot of the driver.

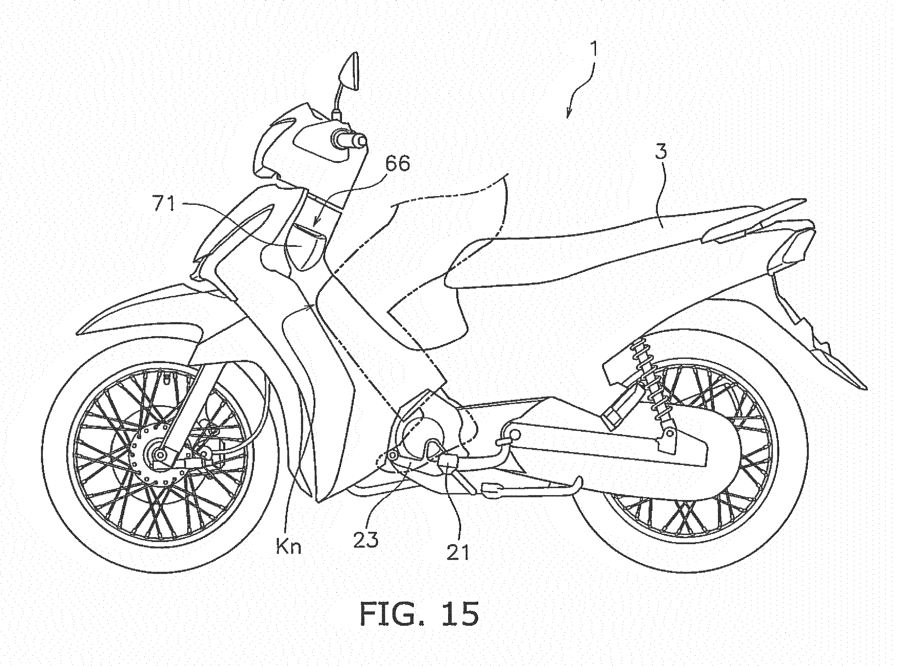

FIG. 15 is a diagram illustrating a state in which the driver is seated at a position more forward than the seating position in FIG. 14. As described above, in the underbone vehicle 1, the driver places his or her feet on the footrest bars 21 and 22 respectively. Therefore, when the driver changes his riding posture, each knee Kn is moved with the foot serving as the fulcrum without moving the foot. As shown in FIG. 15, when the driver moves the sitting position forward, the knee Kn is rotated with the foot serving as the fulcrum, whereby the knee Kn is moved forward and downward. In the underbone vehicle 1 according to the present embodiment, the storage unit 66 is disposed at a high position. With this configuration, even if the storage portion 66 protrudes rearward to some extent, the influence on the movement of the foot can be decreased.

At least a portion of the inner protruding portion 72 overlaps with the left lamp unit 44 at a position more laterally inward than the outer lateral edge of the air cleaner 57 in a front view of the vehicle. As a result, the inner protruding portion 72, together with the left lamp unit 44, can decrease the ingress of water and mud into the air cleaner 57.

The opening 67 of the storage portion 66 is disposed behind the first portion 55. As a result, it is possible to limit the rearward protrusion of the storage portion 66 to a small degree, and to restrain a decline in the ease of getting on and off the vehicle. In addition, the influence by the storage unit 66 on the movement of the foot during riding can be reduced, thereby restraining a decline in the comfort of riding the vehicle.

At least portion of the inner protruding portion 72 overlaps with the air cleaner 57 in a plan view of the vehicle. As a result, the ingress of water and mud into the air cleaner 57 can be further decreased by the inner protruding portion 72.

The rear wall portion 73 of the inner protruding portion 72 extends rearward and upward from the lower end of the inner protruding portion 72 in a side view of the vehicle. Therefore, the ingress of water and mud into the air cleaner 57 can be further decreased by the rear wall portion 73. In addition, the space of the storage portion 66 can be made larger while avoiding interference with the air cleaner 57.

The bottom wall portion 74 of the inner protruding portion 72 extends forward and upward from the lower end of the inner protruding portion 72 in a side view of the vehicle. As a result, the space of the storage portion 66 can be made larger while avoiding interference with the front fender 46.

While a preferred embodiment of the present invention has been described above, the present invention is not limited to the above embodiment. It is to be understood that variations and modifications will be apparent to those skilled in the art without departing from the scope of the present invention, which is defined by the claims.

## Claims

1. An underbone vehicle (1) comprising:
a head pipe (11) disposed at a center of the vehicle in a vehicle width direction; a front cover (41) disposed in front of the head pipe (11);
a seat (3) for seating a driver, the seat (3) disposed more rearward than the head pipe (11);
a main frame (12) extending rearward and downward from the head pipe (11) toward a position lower than the seat (3);
a steering device (5) that includes a handle (25) to be operated by the driver, the handle (25) disposed more upward than the head pipe (11) and more forward than the seat (3), a front fork (26) inserted in the head pipe (11), and a front wheel (27) supported by the front fork (26), the steering device (5) being supported by the head pipe (11) so as to be rotatable in accordance with operation of the handle (25);
an engine (4) disposed below the main frame (12) and supported by the main frame (12) in a non-swingable manner, and having at least a portion thereof disposed more forward than the seat (3);
an air cleaner (57), supported by the main frame (12), and having at least a portion thereof disposed between the main frame (12) and the engine (4) in a vehicle up-down direction;
a footrest bar (21,22) for the driverto place his or her foot, the footrest bar (21,22) disposed more rearward than a front end of the engine (4) and lower than the seat (3) and the main frame (12);
a front fender (46) having at least a portion thereof disposed between an upper end of the front wheel (27) and a lower end of the front cover (41) in the vehicle up-down direction, and having at least a portion thereof disposed between a rear end of the front wheel (27) and the front end of the engine (4) in a vehicle front-rear direction;
a concave portion (54) disposed above the main frame (12) and having a shape recessed more downward than the seat (3); and
a leg shield (52) disposed more laterally outward than the concave portion (54) in the vehicle width direction, and more forward than the concave portion (54) and the footrest bar (21,22), wherein,
in a front view of the vehicle, a dimension from a lower end of the front wheel (27) to the lower end of the front cover (41) in the vehicle up-down direction is greaterthan a dimension of the front cover (41) in the vehicle up-down direction;
the footrest bar (21,22) has a rod-like shape in which a dimension in the vehicle front-rear direction is less than a dimension in the vehicle width direction;
the air cleaner (57) includes an intake port (61); **characterised in that**
the intake port (61) is opened toward the rear, wherein a protruding portion (72) disposed more forward and more upward than the footrest bar (21,22) and projecting downward from the leg shield (52) towards the front fender (46), wherein,
the protruding portion (72) overlaps with at least a portion of the head pipe (11) that is located more upward than the air cleaner (57) or overlaps with a portion of the main frame (12) that is located more upward than the air cleaner (57), in a side view of the vehicle;
at least a portion of the protruding portion (72) is disposed more laterally inward than an outer lateral end of the air cleaner (57) in the vehicle width direction;
a front end of the protruding portion (72) is disposed more forward than a front end of the air cleaner (57);
the protruding portion (72) is a part of a storage portion (66) having a space for storing an article; the storage portion (66) protrudes rearward from the leg shield (52);
a lower end of the protruding portion (72) is located more upward than a lower end of the concave portion (54);
in a side view of the vehicle, the lower end of the protruding portion (72) is located lower and more forward than the upper end of the air cleaner(57); and
the protruding portion (72) includes a rear wall portion (73) extending rearward and upward from the lower end of the protruding portion (72) and located above the air cleaner (57), in a side view of the vehicle.

2. The underbone vehicle (1) according to claim 1, wherein
an outer lateral end of the protruding portion (72) is disposed more laterally outward than an outer lateral edge of the air cleaner (57).

3. The underbone vehicle (1) according to claims 1 or 2, wherein
the storage portion (66) has no lid and is opened facing upward.

4. The underbone vehicle (1) according to any one of claims 1 to 3, further comprising a lamp (44) disposed on the front cover (41),
wherein at least a portion of the protruding portion (72) overlaps with the lamp (44) at a position more laterally inward than the outer lateral edge of the air cleaner (57), in a front view of the vehicle.

5. The underbone vehicle (1) according to any one of claims 1 to 4, wherein
the leg shield (52) includes a first portion (55) that extends forward and downward and a second portion (56) connected to the first portion (55) and extending rearward and downward,
a length of the first portion (55) in an extending direction of the first portion (55) is shorter than a length of the second portion (56) in an extending direction of the second portion (56), and
the storage portion (66) has an opening disposed behind the first portion (55).

6. The underbone vehicle (1) according to any one of claims 1 to 5, wherein
at least a portion of the protruding portion (72) overlaps with the air cleaner (57), in a plan view of the vehicle.

7. The underbone vehicle (1) according to any one of claims 1 to 6, wherein
the protruding portion (72) includes a bottom wall portion (74) extending forward and upward from the lower end of the protruding portion (72), in a side view of the vehicle.

8. The underbone vehicle (1) according to any one of claims 1 to 7, further comprising a steering cover (68) extending upward and rearward from a front end of the concave portion (54),
wherein the storage portion (66) is located more forward than a rear edge of the steering cover (68), in a side view of the vehicle.

9. The underbone vehicle (1) according to any one of claims 1 to 8, further comprising a pedal (23) disposed forward or rearward of the footrest bar (21,22) and operated by the driver's foot.

## Patentansprüche

1. Underbone-Fahrzeug (1), das umfasst:
ein Steuerrohr (11), das in einer Mitte des Fahrzeugs in einer Fahrzeug-Breitenrichtung angeordnet ist;
eine vordere Verkleidung (41), die vor dem Steuerrohr (11) angeordnet ist;
einen Sitz (3), auf dem ein Fahrer sitzt, wobei der Sitz (3) weiter hinten angeordnet ist als das Steuerrohr (11);
einen Hauptrahmen (12), der sich von dem Steuerrohr (11) nach hinten und unten auf eine Position zu erstreckt, die tiefer liegt als der Sitz (3);
eine Lenkvorrichtung (5), die einen von dem Fahrer zu betätigenden Griff (25), der weiter oben als das Steuerrohr (11) und weiter vorn angeordnet ist als der Sitz (3), eine in das Steuerrohr (11) eingeführte Vorderradgabel (26) sowie ein an der Vorderradgabel (26) gelagertes Vorderrad (27) einschließt, wobei die Lenkvorrichtung (5) an dem Steuerrohr (11) so gelagert ist, dass sie mittels Betätigung des Griffs (25) gedreht werden kann;
einen Motor (4), der unterhalb des Hauptrahmens (12) angeordnet ist und an dem Hauptrahmen (12) schwingungsfrei gelagert ist, wobei wenigstens ein Abschnitt desselben weiter vorn angeordnet ist als der Sitz (3);
einen Luftfilter (57), der an dem Hauptrahmen (12) gelagert ist, wobei wenigstens ein Abschnitt desselben in einer senkrechten Richtung des Fahrzeugs zwischen dem Hauptrahmen (12) und dem Motor (4) angeordnet ist;
eine Fußraste (21, 22), auf die der Fahrer seinen Fuß aufsetzen kann, wobei die Fußraste (21, 22) weiter hinten als ein vorderes Ende des Motors (4) und tiefer angeordnet ist als der Sitz (3) und der Hauptrahmen (12);
einen vorderen Kotflügel (46), wobei wenigstens ein Abschnitt desselben in der senkrechten Richtung des Fahrzeugs zwischen einem oberen Ende des Vorderrades (27) und einem unteren Ende der vorderen Verkleidung (41) angeordnet ist, und wenigstens ein Abschnitt desselben in einer Fahrzeug-Längsrichtung zwischen einem hinteren Ende des Vorderrades (27) und dem vorderen Ende des Motors (4) angeordnet ist;
einen konkaven Abschnitt (54), der oberhalb des Hauptrahmens (12) angeordnet ist und eine Form hat, die weiter nach unten ausgespart ist als der Sitz (3); sowie
einen Beinschutz (52), der in der Fahrzeug-Breitenrichtung seitlich weiter außen als der konkave Abschnitt (54) und weiter vorn angeordnet ist als der konkave Abschnitt (54) und die Fußraste (21, 22), wobei
eine Abmessung von einem unteren Ende des Vorderrades (27) zu dem unteren Ende der vorderen Verkleidung (41) in der senkrechten Richtung des Fahrzeugs, in einer Vorderansicht des Fahrzeugs, größer ist als eine Abmessung der vorderen Verkleidung (41) in der senkrechten Richtung des Fahrzeugs;
die Fußraste (21, 22) eine stangenartige Form hat, bei der eine Abmessung in der Fahrzeug-Längsrichtung kleiner ist als eine Abmessung in der Fahrzeug-Breitenrichtung;
der Luftfilter (57) eine Einlassöffnung (61) aufweist; **dadurch gekennzeichnet, dass** die Einlassöffnung (61) nach hinten geöffnet ist, wobei
ein vorstehender Abschnitt (72) weiter vorn und weiter oben angeordnet ist als die Fußraste (21, 22) und von dem Beinschutz (52) in Richtung des vorderen Kotflügels (46) nach unten vorsteht, und
der vorstehende Abschnitt (72), in einer Seitenansicht des Fahrzeugs, sich mit wenigstens einem Abschnitt des Steuerrohrs (11) überlappt, der weiter oben angeordnet ist als der Luftfilter (57), oder sich mit einem Abschnitt des Hauptrahmens (12) überlappt, der weiter oben angeordnet ist als der Luftfilter (57);
wenigstens ein Teil des vorstehenden Abschnitts (72) in der Fahrzeug-Breitenrichtung seitlich weiter innen angeordnet ist als ein äußeres seitliches Ende des Luftfilters (57);
ein vorderes Ende des vorstehenden Abschnitts (72) weiter vorn angeordnet ist als ein vorderes Ende des Luftfilters (57);
der vorstehende Abschnitt (72) ein Teil eines Aufbewahrungsabschnitts (66) ist, der einen Raum zum Aufbewahren eines Gegenstandes aufweist;
der Aufbewahrungsabschnitt (66) von dem Beinschutz (52) nach hinten vorsteht;
ein unteres Ende des vorstehenden Abschnitts (72) weiter oben angeordnet ist als ein unteres Ende des konkaven Abschnitts (54);
das untere Ende des vorstehenden Abschnitts (72), in einer Seitenansicht des Fahrzeugs, weiter unten und weiter vorn angeordnet ist als das obere Ende des Luftfilters (57); und
der vorstehende Abschnitt (72) einen Rückwandabschnitt (73) einschließt, der sich, in einer Seitenansicht des Fahrzeugs, von dem unteren Ende des vorstehenden Abschnitts (72) nach hinten und nach oben erstreckt und oberhalb des Luftfilters (57) angeordnet ist.

2. Underbone-Fahrzeug (1) nach Anspruch 1, wobei
ein äußeres seitliches Ende des vorstehenden Abschnitts (72) seitlich weiter außen angeordnet ist als eine äußere seitliche Kante des Luftfilters (57).

3. Underbone-Fahrzeug (1) nach Anspruch 1 oder 2, wobei
der Aufbewahrungsabschnitt (66) keine Abdeckung aufweist und nach oben offen ist.

4. Underbone-Fahrzeug (1) nach einem der Ansprüche 1 bis 3, das des Weiteren eine Leuchte (44) umfasst, die an der vorderen Verkleidung (41) angeordnet ist,
wobei wenigstens ein Teil des vorstehenden Abschnitts (72) sich mit der Leuchte (44) an einer Position überlappt, die, in einer Vorderansicht des Fahrzeugs, seitlich weiter innen liegt als die äußere seitliche Kante des Luftfilters (57).

5. Underbone-Fahrzeug (1) nach einem der Ansprüche 1 bis 4, wobei
der Beinschutz (52) einen ersten Abschnitt (55), der sich nach vorn und nach unten erstreckt, sowie einen zweiten Abschnitt (56) einschließt, der mit dem ersten Abschnitt (55) verbunden ist und sich nach hinten und nach unten erstreckt,
eine Länge des ersten Abschnitts (55) in einer Richtung, in der sich der erste Abschnitt (55) erstreckt, kürzer ist als eine Länge des zweiten Abschnitts (56) in einer Richtung, in der sich der zweite Abschnitt (56) erstreckt, und
der Aufbewahrungsabschnitt (66) eine hinter dem ersten Abschnitt (55) angeordnete Öffnung aufweist.

6. Underbone-Fahrzeug (1) nach einem der Ansprüche 1 bis 5, wobei
wenigstens ein Teil des vorstehenden Abschnitts (72) sich, in einer Draufsicht auf das Fahrzeug, mit dem Luftfilter (57) überlappt.

7. Underbone-Fahrzeug (1) nach einem der Ansprüche 1 bis 6, wobei
der vorstehende Abschnitt (72) einen Bodenwandabschnitt (74) einschließt, der sich, in einer Seitenansicht des Fahrzeugs, von dem unteren Ende des vorstehenden Abschnitts (72) nach vorn und nach oben erstreckt.

8. Underbone-Fahrzeug (1) nach einem der Ansprüche 1 bis 7, das des Weiteren eine Lenkungs-Verkleidung (68) umfasst, die sich von einem vorderen Ende des konkaven Abschnitts (54) nach oben und nach hinten erstreckt,
wobei der Aufbewahrungsabschnitt (66), in einer Seitenansicht des Fahrzeugs, weiter vorn angeordnet ist als eine Hinterkante der Lenkungs-Verkleidung (68).

9. Underbone-Fahrzeug (1) nach einem der Ansprüche 1 bis 8, das des Weiteren ein Pedal (23) umfasst, das vor oder hinter der Fußraste (21,22) angeordnet ist und mit dem Fuß des Fahrers betätigt wird.

## Revendications

1. Véhicule « sous-os » (1) comprenant :
un tube de fourche (11) disposé au centre du véhicule dans la direction de la largeur du véhicule, un carénage avant (41) étant disposé en avant du tube de fourche (11),
un siège (3) permettant à un conducteur de s'asseoir, le siège (3) étant disposé plus vers l'arrière que le tube de fourche (11),
un cadre principal (12) s'étendant vers l'arrière et vers le bas à partir du tube de fourche (11) vers une position plus basse que le siège (3),
un dispositif de braquage (5) qui inclut un guidon (25) que manœuvre le conducteur, le guidon (25) étant disposé plus vers le haut que le tube de fourche (11) est plus vers l'avant que le siège (3), une fourche avant (26) étant insérée dans le tube de fourche (11) et une roue avant (27) étant supportée par la fourche avant (26), le dispositif de braquage (5) étant supporté par le tube de fourche (11) de sorte à pouvoir tourner en fonction d'une manœuvre du guidon (25),
un moteur thermique (4) disposé en dessous du cadre principal (12) et supporté par le cadre principal (12) sans pouvoir osciller et comportant au moins une de ses parties disposée plus vers l'avant que le siège (3),
un filtre à air (57) supporté par le cadre principal (12) et comportant au moins une de ses parties disposée entre le cadre principal (12) et le moteur (4) dans la direction haut bas du véhicule,
un repose pied (21, 22) pour que le conducteur place son pied, le repose pied (21, 22) étant disposé plus vers l'arrière que l'extrémité avant du moteur (4) et plus bas que le siège (3) et le cadre principal (12),
un garde-boue avant (46) dont au moins une partie est disposée entre l'extrémité supérieure de la roue avant (27) et l'extrémité inférieure du carénage avant (41) dans la direction haut bas du véhicule, et comportant au moins une partie disposée entre l'extrémité arrière de la roue avant (27) et l'extrémité avant du moteur (4) dans la direction avant arrière du véhicule,
une partie concave (54) disposée au-dessus du cadre principal (12) et présentant une forme creusée plus vers le bas que le siège (3), et
un protège jambe (52) disposé plus latéralement vers l'extérieur que la partie concave (54) dans la direction de la largeur du véhicule et plus vers l'avant que la partie concave (54) et le repose pied (21, 22), où
dans une vue avant du véhicule, la dimension depuis l'extrémité inférieure de la roue avant (27) jusqu'à l'extrémité inférieure du carénage avant (41) dans la direction haut bas du véhicule est plus grande que la dimension du carénage avant (41) dans la direction haut bas du véhicule,
le repose pied (21, 22) présente la forme d'une tige dont la dimension dans la direction avant arrière du véhicule est inférieure à la dimension dans la direction de la largeur du véhicule,
le filtre à air (57) inclut un orifice d'admission (61), **caractérisé en ce que** l'orifice d'admission (61) est ouvert vers l'arrière, dans lequel :
un organe en saillie (72) est disposé plus vers l'avant et plus vers le haut que le repose pied (21, 22) et dépasse vers le bas depuis le protège jambe (52) en direction du garde-boue avant (46), dans lequel :
l'organe en saillie (72) chevauche au moins une partie du tube de fourche (11) qui est située plus vers le haut que le filtre à air (57), ou bien chevauche une partie du cadre principal (12) qui est située plus vers le haut que le filtre à air (57) dans une vue latérale du véhicule,
au moins une partie de l'organe en saillie (72) est disposée plus latéralement vers l'intérieur que l'extrémité latérale externe du filtre à air (57) dans la direction de la largeur du véhicule,
l'extrémité avant de l'organe en saillie (72) est disposée plus vers l'avant que l'extrémité avant du filtre à air (57),
l'organe en saillie (72) fait partie d'un organe de stockage (66) comportant un espace pour stocker un article,
l'organe de stockage (66) dépasse vers l'arrière depuis le protège jambe (52),
l'extrémité inférieure de l'organe en saillie (72) est située plus vers le haut que l'extrémité inférieure de la partie concave (54),
dans une vue latérale du véhicule, l'extrémité inférieure de l'organe en saillie (72) est située plus bas et plus vers l'avant que l'extrémité supérieure du filtre à air (57), et
l'organe en saillie (72) inclut une paroi arrière (73) s'étendant vers l'arrière et vers le haut depuis l'extrémité inférieure de l'organe en saillie (72) et située au-dessus du filtre à air (57) dans une vue latérale du véhicule.

2. Véhicule « sous-os » (1) selon la revendication 1, dans lequel :
l'extrémité latérale externe de l'organe en saillie (72) est disposée plus latéralement vers l'extérieur que le bord latéral externe du filtre à air (57).

3. Véhicule « sous-os » (1) selon la revendication 1 ou la revendication 2, dans lequel :
l'organe de stockage (66) de possède pas de couvercle et il est ouvert en faisant face vers le haut.

4. Véhicule « sous-os » (1) selon l'une quelconque des revendications 1 à 3, comprenant en outre un phare (44) disposé sur le carénage avant (41),
dans lequel au moins une partie de l'organe en saillie (72) chevauchent le phare (44) à une position située plus latéralement vers l'intérieur que le bord latéral externe du filtre à air (57) dans une vue avant du véhicule.

5. Véhicule « sous-os » (1) selon l'une quelconque des revendications 1 à 4, dans lequel :
le protège jambe (52) inclut une première partie (55) qui s'étend vers l'avant et vers le bas et une seconde partie (56) reliée à la première partie (55) et s'étendant vers l'arrière et vers le bas,
la longueur de la première partie (55) dans la direction d'extension de la première partie (55) est plus courte que la longueur de la seconde partie (56) dans la direction d'extension de la seconde partie (56), et
l'organe de stockage (66) possède une ouverture disposée derrière la première partie (55).

6. Véhicule « sous-os » (1) selon l'une quelconque des revendications 1 à 5, dans lequel :
au moins une partie de l'organe en saillie (72) chevauche le filtre à air (57) dans une vue en plan du véhicule.

7. Véhicule « sous-os » (1) selon l'une quelconque des revendications 1 à 6, dans lequel :
l'organe en saillie (72) inclut une paroi de fond (74) s'étendant vers l'avant et vers le haut depuis l'extrémité inférieure de l'organe en saillie (72) dans une vue latérale du véhicule.

8. Véhicule « sous-os » (1) selon l'une quelconque des revendications 1 à 7, comprenant en outre un carénage de direction (68) se déployant vers le haut et vers l'arrière depuis l'extrémité avant de la partie concave (54),
dans lequel l'organe de stockage (66) est situé plus vers l'avant que le bord arrière du carénage de direction (68) dans une vue latérale du véhicule.

9. Véhicule « sous-os » (1) selon l'une quelconque des revendications 1 à 8, comprenant en outre une pédale (23) disposée à l'avant ou à l'arrière du repose pied (21, 22) et manœuvrée par le pied du conducteur.
